# EUROPÄISCHE PATENTANMELDUNG

(11) **EP 0 902 575 A2**
(43) Veröffentlichungstag der Anmeldung: **17.03.1999**
(21) Anmeldenummer: 98115087.3
(22) Anmeldetag: 11.08.1998
(51) Int. Cl.: H04L 27/30

(54) **Verfahren und Einrichtung zur Auswertung von Mehrfrequenz-Tonsignalen unter Einsatz von adaptiven Notch-Wellendigitalfiltern**

(30) Priorität: 12.09.1997 DE 19740220
(71) Anmelder: SIEMENS AKTIENGESELLSCHAFT, 80333 München (DE)
(72) Erfinder: Lucioni, Gonzalo, 58454 Witten (DE)

(57) **Zusammenfassung**

Beschrieben wird ein Verfahren und eine Einrichtung zur Auswertung von Mehrfrequenz-Tonsignalen in einem Kommunikationssystem. Das digitale Tonsignal (S) wird durch Dezimationsfilter (D0, D1, D2) und adaptive Notch-Wellendigitalfilter (ANWDF1, ANWDF2) gefiltert. Eine Diskriminatoreinheit (Rw) ermittelt aus Amplituden (a1, a2) und den adaptiven Filterkoeffizienten (k1, k2) das übertragene Zeichen (Z).

## Beschreibung

Die Erfindung betrifft ein verfahren zur Auswertung von Mehrfrequenz-Tonsignalen in einem Kommunikationssystem. Ferner betrifft die Erfindung eine Einrichtung zum Durchführen dieses Verfahrens.

Mehrfrequenz-Tonsignale werden zur Übertragung von Zeichen und zur Signalisierung in Kommunikationssystemen, z.B. Telefonsystemen, verwendet, um Ziffern oder Zeichen über analoge Sprachkanäle zu übertragen. Jedes Zeichen ist definiert durch ein Gemisch aus zwei Tönen, die von zwei verschiedenen Tongruppen stammen. Die Verwendung von Mehrfrequenz-Tonsignalen in Telekommunikationsanlagen sind in "Technical Features of Push-Button Telephone Sets", ITU-T Recommendation Q.23, Blue Book, und "Multifrequency Push-Button Signal Reception", ITU-T Recommendation Q.24, Blue Book, beschrieben. Üblicherweise wird ein Signal übertragen, welches ein Gemisch aus zwei Tonfrequenzen enthält, die aus vier Tonfrequenzen einer unteren Tongruppe und vier Tonfrequenzen einer oberen Tongruppe ausgewählt sind. Auf diese Weise können insgesamt 16 unterschiedliche Zeichen festgelegt werden. In der zuvor erwähnten Literatur sind Toleranzen für Sende- und Empfangsparameter definiert. Die vorliegende Erfindung bezieht sich auf den Empfang und die Auswertung von Mehrfrequenz-Tonsignalen.

Bislang wurde das übertragene Signal dadurch ausgewertet, daß es Bandpaßfilterbänken zugeführt worden ist, welche die Tonsignale der unteren und der oberen Tongruppe getrennt ausfiltert, d.h. es werden acht schmale Frequenzbänder auf Energiegehalt überprüft. Die Erkennung einzelner Zeichen erfolgt dann anhand der in der oben angegebenen Literatur genannten Bedingungen. Bei einem anderen bekannten Verfahren wird auf das Signal die digitale Fourier-Transformation nach dem Goetzel-Algorithmus angewandt, um den Energiegehalt innerhalb der schmalen Frequenzbänder festzustellen. Bei den genannten Verfahren nach dem Stand der Technik ist der erforderliche technische Aufwand relativ groß, insbesondere wenn die Tonfrequenzen innerhalb vergrößerter Toleranzbreiten schwanken.

Es ist Aufgabe der Erfindung, ein Verfahren bzw. eine Einrichtung zur Auswertung von Mehrfrequenz-Tonsignalen anzugeben, welches bzw. welche mit geringem technischen Aufwand die Erkennung von übertragenen Zeichen ermöglicht.

Gemäß der Erfindung wird ein Verfahren zur Auswertung von Mehrfrequenz-Tonsignalen in einem Kommunikationssystem angegeben, bei dem jedes zu übertragende Zeichen als ein Signal dargestellt wird, welches ein Gemisch aus zwei Tonfrequenzen enthält, die aus zwei verschiedenen Gruppen von Tonfrequenzen ausgewählt sind, das mit einer vorbestimmten Abtastrate digital abgetastete Signal einem ersten Dezimationsfilter zugeführt wird, in welchem das Signal tiefpaßgefiltert wird und eine Abtastratenreduktion um den Faktor 2 erfolgt, danach das so gefilterte Signal einem zweiten Dezimationsfilter zugeführt wird, welches es unter weiterer Reduzierung der Abtastrate um den Faktor 2 durch Bandpaßfilterung auf ein hochpaßgefiltertes Signal und ein tiefpaßgefiltertes Signal aufteilt, das hochpaßgefilterte Signal einem ersten adaptiven Notch-Wellendigitalfilter zugeführt wird, dessen adaptiver Filterkoeffizient ein Maß für die Frequenz des hochpaßgefilterten Signals ist, das hochpaßgefilterte Signal nach einer Abtastratenreduktion um den Faktor 2 einem ersten Pegeldetektor zugeführt wird, welcher die Amplitude des hochpaßgefilterten Signals ermittelt, das tiefpaßgefilterte Signal einem dritten Dezimationsfilter zugeführt wird, welches eine Hochpaßfilterung und eine Abtastratenreduktion um den Faktor 2 vornimmt, das tiefpaßgefilterte Signal einem zweiten adaptiven Notch-Wellendigitalfilter zugeführt wird, dessen adaptiver Filterkoeffizient ein Maß für die Frequenz des tiefpaßgefilterten Signals ist, das tiefpaßgefilterte Signal danach einem zweiten Pegeldetektor zugeführt wird, welcher die Amplitude des tiefpaßgefilterten Signals ermittelt, und bei dem eine Diskriminatoreinheit aus den ermittelten Amplituden des hochpaßgefilterten Signals und des tiefpaßgefilterten Signals und den adaptiven Filterkoeffizienten das übertragene Zeichen ermittelt.

Bei dem Verfahren nach der Erfindung wird das das Tonfrequenzgemisch enthaltende übertragene Signal durch Dezimationsfilter und Notch-Wellendigitalfilter gefiltert. Dezimationsfilter sind bekanntlich digitale Filter, welche die Abtastrate um einen bestimmten Faktor erniedrigen. Diese Erniedrigung der Abtastrate bezeichnet man als Dezimation oder Abtastratenreduktion. Die Abtastratenreduktion um eine bestimmte Zahl von Abtastwerten je Zeiteinheit wird im allgemeinen durch Ausblendung von Abtastwerten realisiert. Bei der vorliegenden Erfindung ist die jeweilige Abtastratenreduktion 2, d.h. es wird nur jeder zweite Abtastwert weiterverarbeitet.

In den bei der Erfindung eingesetzten Dezimationsfiltern erfolgt die Abtastratenreduktion stets unter Hinzunahme eines geeigneten und an die Abtastratenreduktion angepaßten Filters, z.B. eines Tiefpaßfilters, eines Bandpaßfilters oder eines Hochpaßfilters. Das dem Dezimationsfilter zugeführte Signal wird zunächst durch das angepaßte Filterband begrenzt, so daß bei der verringerten Abtastrate keine störenden Überlagerungen verschiedener Frequenzkomponenten auftreten, was bekanntlich als "aliasing" bezeichnet wird. Durch die Abtastratenreduktion wird der technische Aufwand innerhalb des gesamten digitalen Systems, welches durch einen Signalprozessor und zugehörigen Programmen gesteuert wird, erheblich reduziert.

Vorzugsweise werden digitale Filteralgorithmen verwendet, die es gestatten, die jeweiligen Dezimationsfilter mit einer möglichst niedrigen Abtastrate zu betreiben. Für nicht rekursive Filteralgorithmen kann die Abtastrate um einen beliebigen Faktor reduziert werden. Für rekursive Filteralgorithmen ist dies jedoch nur in Ausnahmen möglich. Daher wird in einem bevorzugten Ausführungsbeispiel der Erfindung als Dezimationsfilter ein rekursives bireziprokes Brückenwellendigitalfilter verwendet, welches bei einer Abtastratenreduktion um den Faktor 2 mit der unteren Abtastrate betrieben werden kann. Der Einsatz rekursiver Filteralgorithmen erfordert bekanntlich weniger technischen Aufwand, wodurch der Gesamtaufwand für die Erfindung noch weiter verringert wird. Das genannte rekursive bireziproke Brückenwellendigitalfilter hat den weiteren Vorteil, daß komplementäre Filterfunktionen, d.h. Durchlaßband und Sperrband, ohne Verursachung von Mehraufwand zur Verfügung stehen. Dies kann vorteilhafterweise für die Trennung der Frequenzbänder für die obere und die untere Tongruppe genutzt werden.

Weiterhin werden bei der Erfindung adaptive Notch-Wellendigitalfilter verwendet, welche die jeweiligen Tonsignale ausfiltern. Solche Notch-Wellendigitalfilter lassen sich in digitaler Form durch relativ einfache Algorithmen realisieren. Durch Nachführen des adaptiven Filterkoeffizienten und der Auswertung des Filtersignals durch Pegeldetektoren kann relativ schnell ermittelt werden, ob eine signifikante Amplitude für ein Tonsignal vorhanden ist. Da der adaptive Filterkoeffizient des adaptiven Notch-Wellendigitalfilter ein Maß für die Frequenz ist, kann sogleich das Vorhandensein oder nicht Vorhandensein eines bestimmten Tonsignals festgestellt werden.

Während bei den Verfahren nach dem Stand der Technik eine Vielzahl von softwaretechnisch realisierten Baugruppen erforderlich sind, z.B. eine Vielzahl von Pegeldetektoren, ist die Zahl der Baugruppen beim Verfahren nach der Erfindung reduziert, beispielsweise sind nur zwei Pegeldetektoren erforderlich, um eine Vielzahl von Tonsignalen aus der oberen Tonsignal-Gruppe und der unteren Tonsignal-Gruppe auszufiltern und daraus die Zeichen zu ermitteln. Das Verfahren nach der Erfindung arbeitet also mit geringem Aufwand und läßt sich einfach realisieren. Aufgrund der Adaption über die adaptiven Filterkoeffizienten ist das Verfahren nach der Erfindung nicht empfindlich gegen Frequenzschwankungen in den Tonsignalen. Das erfindungsgemäße Verfahren kann also auch für eine relativ große Frequenztoleranz der Tonsignale eingesetzt werden, was den technischen Aufwand sowohl auf der Sendeseite als auch auf der Empfängerseite reduziert.

Gemäß einem weiteren Aspekt der Erfindung wird eine Einrichtung zum Durchführen des Verfahrens nach der Erfindung angegeben. Die Merkmale dieser Einrichtung sind im Anspruch 7 angegeben.

Die auf die unabhängigen Ansprüche rückbezogenen abhängigen Ansprüche definieren vorteilhafte Weiterbildungen der Erfindung.

Ein Ausführungsbeispiel der Erfindung wird im folgenden anhand der Zeichnung erläutert. Darin zeigt
- Figur 1: schematisch den Aufbau eines Mehrfrequenz-Tonsignal-Empfängers,
- Figur 2: schematisch den Frequenzgang für die in den verschiedenen Filterstufen vorgenommene Abtastratenreduktion, und
- Figur 3: die verschiedenen Ausführungszustände anhand einer Darstellungsform als Zustandsmaschine.

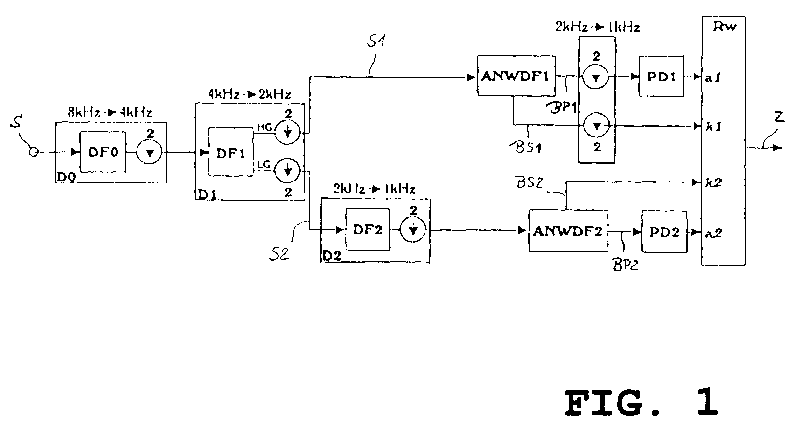

Figur 1 zeigt schematisch den Aufbau des Mehrfrequenz-Tonsignal-Empfängers, welcher grob in drei Verarbeitungsstufen eingeteilt werden kann. Eine erste Stufe enthält Dezimationsfilter D0 und D1. In dieser Stufe erfolgt eine Aufteilung des zugeführten Mehrfrequenz-Tonsignals S in einen oberen Frequenzbereich HG und einen unteren Frequenzbereich LG. Die zweite Verarbeitungsstufe ermittelt durch Einsatz von Notch-Wellendigitalfiltern ANWDF1 und ANWDF2 sowie Pegeldetektoren PD1 und PD2 die Frequenz des Tonsignals im oberen Frequenzbereich HG bzw. im unteren Frequenzbereich LG und die zugehörige Amplitude. Eine dritte Verarbeitungsstufe umfaßt eine Diskriminatoreinheit Rw, welche aus den ermittelten Amplituden und Frequenzen das übertragene Zeichen erkennt und ausgibt.

Im folgenden wird die Funktionsweise des Empfängers nach Figur 1 erläutert. Dem Dezimationsfilter D0 wird das Mehrfrequenz-Tonsignal S als Digitalsignal zugeführt, welches üblicherweise mit einer Abtastfrequenz von 8 kHz abgetatstet worden ist. Aus Vereinfachungsgründen sind in Figur 1 die erforderliche Hardware wie z.B. A/D-Wandler, Signalprozessor, Speicher etc. weggelassen. Das Dezimationsfilter D0 enthält ein Tiefpaßfilter DF0 und führt eine Abtastdatenreduktion um den Faktor 2 durch, d.h. die vom Dezimationsfilter D0 ausgegebene digitale Signalfolge hat eine Abtastrate von 4 kHz. Das Dezimationsfilter D0 sowie die weiteren Dezimationsfilter D1 und D2 sind rekursive bireziproke Brückenwellendigitalfilter, deren Aufbau beschrieben sind in "Wave Digital Filters: Theory and Practice", A. Fettweis, Proceedings of the IEEE, Feb. 1986, pp. 270-327, und in "Explicit Formulas for Lattice Wave Digital Filters", L. Gazsi, IEEE Trans. on Circuits and Systems, Jan. 1985, pp. 68-88. Derartige Dezimationsfilter werden mit einer Abtastratenreduktion um den Faktor 2 in der unteren Abtastrate betrieben. Sie haben einen rekursiven Filteralgorithmus, wodurch sich der technische Aufwand bei der Realisierung vermindert.

Das durch das Dezimationsfilter gefilterte Signal S wird dem zweiten Dezimationsfilter D1 zugeführt, welches ein Bandpaßfilter DF1 enthält. Durch das Bandpaßfilter DF1 wird unter Ausnutzung der für solche Art von Dezimationsfilter ohne Mehraufwand vorhandenen komplementären Filterfunktion das Signal S in ein hochpaßgefiltertes Signal S1 und ein tiefpaßgefiltertes Signal S2 aufgeteilt. Ferner wird im Dezimationsfilter D1 eine weitere Abtastratenreduktion um den Faktor 2 durchgeführt, d.h. die Signale S1 und S2 sind mit einer Abtastrate von nunmehr 2 kHz behaftet. In den Dezimationsfiltern D0 und D1 wird ferner eine Hörtonunterdrückung bei 425 Hz durchgeführt, um eine Störeinwirkung dieses Hörtons auf die Signale S1 und S2 zu vermeiden.

Das hochfrequente Signal S1 wird in der zweiten Verarbeitungsstufe dem adaptiven Notch-Wellendigitalfilter ANWDF1 zugeführt. Dieses Notch-Wellendigitalfilter ANWDF1 wird zur Isolierung eines sinusförmigen Nutzsignals aus dem Signal S1 verwendet. Eine vorteilhafte Eigenschaft dieses Notch-Wellendigitalfilters ist die einfache, unabhängige Parametrisierung der Mittenfrequenz und der Bandbreite der Übertragungsfunktion. Weiterhin hat ein solches Filter sehr gute numerische Eigenschaften und läßt sich somit relativ einfach realisieren. Der Aufbau von Notch-Wellendigitalfilter ist z.B. beschrieben in dem Fachaufsatz "Adaptive Notch Wave Digital Filters", A. Zalnieriunas, Proceedings of ISCAS, New Orleans, USA, May 1990. Die bei diesem Ausführungsbeispiel verwendeten Notch-Wellendigitalfilter ANWDF1 und ANWDF2 sind als Brückenwellendigitalfilter zweiten Grades mit einem festen Filterkoeffizienten und einem adaptiven Filterkoeffizienten k1 bzw. k2 ausgeführt. Das Notch-Wellendigitalfilter ANWDF1 hat einen Bandsperrenausgang BS1 und einen dazu komplementären Bandpaßausgang BP1. Zur Adaption des Notch-Wellendigitalfilters ANWDF1, d.h. zur Einstellung des Frequenzganges wird der Bandsperrenausgang BS1 verwendet. Der adaptive Filterkoeffizient k1 wird über diesen Ausgang BS1 durch den Signalprozessor eingestellt. In der letztgenannten Literaturstelle wird detailliert erläutert, wie die Mittenfrequenz und die Bandbreite des Notch-Wellendigitalfilters ANWDF1 durch den festen Filterkoeffizienten und den adaptiven Filterkoeffizienten k1 definiert ist. Der Parameter k1 und damit die Mittenfrequenz des Notch-Wellendigitalfilters ANWDF1 wird so lange nachgestellt, bis ein Fehlersignal minimal wird. In diesem Zustand entspricht die Mittenfrequenz des Notch-Wellendigitalfilters ANWDF1 der zu detektierenden Tonfrequenz. Die Amplitude dieser Tonfrequenz ist am Ausgang BP1 des Bandpaßfilters zu ermitteln. In der vorgenannten Literaturstelle sind verschiedene Adaptionsalgorithmen erläutert. Das Signal am Ausgang des Notch-Wellendigitalfilters wird einer weiteren Abtastratenreduktion unterzogen, d.h. die Abtastfrequenz sinkt in dem Beispiel von 2 kHz auf 1 kHz. Das Signal wird dann dem Pegeldetektor PD1 zugeführt, welcher die Amplitude a1 des detektierten Tonsignals angibt. Die Pegeldetektoren PD1 und PD2 können auf der Basis einer Spitzenwertdetektion arbeiten, da im Falle von Sinussignalen als Tonsignale der Spitzenwert proportional der Signalenergie ist. Die nachgeschaltete Diskriminatoreinheit Rw stellt anhand der Amplitude a1 und des eingestellten Filterkoeffizientens k1 fest, ob ein Tonsignal vorliegt oder nicht.

Das tiefpaßgefilterte Signal S2 wird einem dritten Dezimationsfilter D2 zugeführt, welches ein Hochpaßfilter DF2 enthält und eine Abtastratenreduktion um den Faktor 2 vornimmt, d.h. die Abtastrate am Ausgang des Dezimationsfilters D2 beträgt lediglich 1 kHz. Das so gefilterte Signal wird dem Notch-Wellendigitalfilter ANWDF2 zugeführt, welches einen Bandsperrenausgang BS2 und den Bandpaßausgang BP2 hat. Der Aufbau des Notch-Wellendigitalfilters ANWDF2 entspricht prinzipiell dem des Notch-Wellendigitalfilters ANWDF1, ist jedoch an die untere Tonsignalgruppe LG angepaßt. Auch bei diesem Notch-Wellendigitalfilter ANWDF2 wird die Mittenfrequenz mithilfe des Filterkoeffizientens k2 eingestellt. Die Amplitude am Ausgang BP2 wird mithilfe des Pegeldetektors PD2 ermittelt. Auch in diesem Fall stellt die Diskriminatoreinheit Rw anhand des Filterkoeffizienten k2 und der Amplitude a2 fest, ob ein Tonsignal in der unteren Tonsignalgruppe LG vorhanden ist oder nicht. Durch Verknüpfung der Tonsignale aus der oberen Tonsignalgruppe und der ermittelten Tonsignale der unteren Tonsignalgruppe ermittelt die Diskriminatoreinheit das im Mehrfrequenz-Tonsignal enthaltene Zeichen und gibt dies an eine übergeordnete Steuerung weiter.

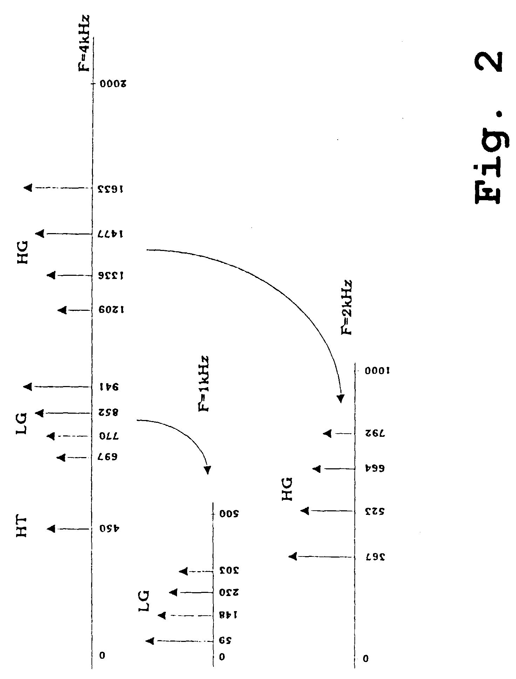

Figur 2 zeigt in Diagrammen die Signale nach den verschiedenen Dezimationsfiltern, wobei die Signalamplituden des Hörtons HT, der Tonsignale der unteren Tonsignalgruppe LG und die Tonsignale der oberen Tonsignalgruppe HG über der Frequenz aufgetragen sind. Im oberen Bildteil ist zu erkennen, daß nach dem Durchlaufen des ersten Dezimationsfilters D0 bei einer reduzierten Abtastfrequenz von 4 kHz noch sämtliche Tonsignale vorhanden sind. Das Diagramm in der Mitte der Figur 2 zeigt das tiefpaßgefilterte Signal S2 nach dem Durchlaufen des dritten Dezimationsfilters D2, d.h. bei einer Abtastrate von 1 kHz. Im unteren Bildteil ist der Frequenzgang des hochpaßgefilterten Signals S1 nach Durchsetzen des zweiten Dezimationsfilters D1 dargestellt. Zu beachten ist, daß in den Signalen S1 und S2 der Hörton HT unterdrückt ist.

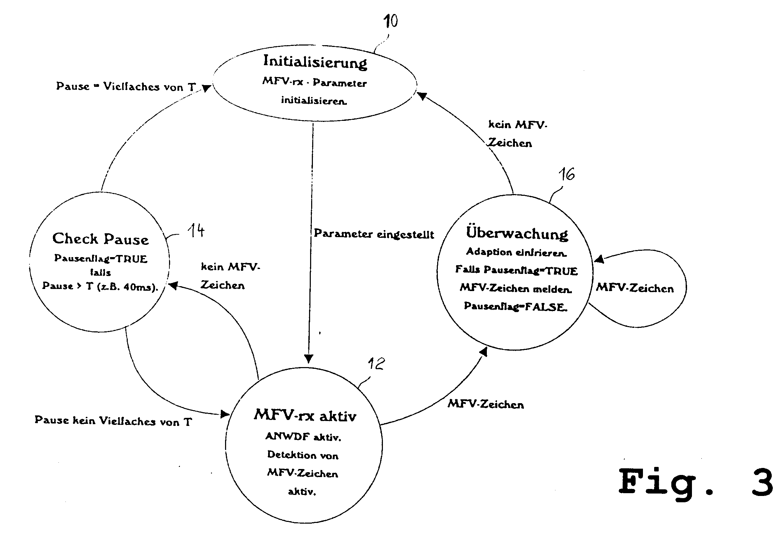

Figur 3 zeigt die Auswertung der in den Amplituden a1 und a2 sowie den Filterkoeffizienten k1 und k2 enthaltenen Informationen zum Ermitteln eines Zeichens anhand einer Darstellung als Zustandsmaschine. Im Zustand 10 erfolgt die Initialisierung im Signalprozessor für die Mehrfrequenz-Tonsignalauswertung. Nach Einstellung der erforderlichen Parameter wird im Zustand 12 die Mehrfrequenz-Tonsignalauswertung aktiviert und es werden Mehrfrequenz-Tonsignale detektiert. Wenn kein Mehrfrequenz-Tonsignal anliegt, so wird im Zustand 14 überprüft, ob eine Pause größer als eine vorbestimmte Zeit T, z.B. größer 40 ms, vorhanden ist. Diese Information wird gespeichert. Falls ein Vielfaches dieser Pause anliegt, so wird zum Zustand 10 verzweigt. Andernfalls wird zum Zustand 12 zurückgegeben.

Der Zustand 16 wird eingestellt, wenn ein gültiges Mehrfrequenz-Tonsignal ermittelt wurde.

In diesem Zustand wird das Ende des gültigen Tonsignals festgestellt. Wenn dieser Fall eintritt, wird zum Zustand 10 verZweigt. Das erkannte Tonsignal wird im Zustand 16 nur dann als gültig freigegeben, wenn vorher eine hinreichend große Pause (vgl. Zustand 14) detektiert worden ist.

## Patentansprüche

1. Verfahren zur Auswertung von Mehrfrequenz-Tonsignalen in einem Kommunikationssystem,
bei dem jedes zu übertragende Zeichen (Z) als ein Signal (S) dargestellt wird, welches ein Gemisch aus zwei Tonfrequenzen enthält, die aus zwei verschiedenen Gruppen (HG, LG) von Tonfrequenzen ausgewählt sind,
das mit einer vorbestimmten Abtastrate digital abgetastete Signal (S) einem ersten Dezimationsfilter (DO) zugeführt wird, in welchem das Signal tiefpaßgefiltert (DFO) wird und eine Abtastratenreduktion um den Faktor 2 erfolgt,
danach das so gefilterte Signal einem zweiten Dezimationsfilter (D1) zugeführt wird, welches es unter weiterer Reduzierung der Abtastrate um den Faktor 2 durch Bandpaßfilterung (DF1) auf ein hochpaßgefiltertes Signal (S1) und ein tiefpaßgefiltertes Signal (S2) aufteilt,
das hochpaßgefilterte Signal (S1) einem ersten adaptiven Notch-Wellendigitalfilter (ANWDF1) zugeführt wird, dessen adaptiver Filterkoeffizient (k1) ein Maß für die Frequenz des hochpaßgefilterten Signals ist,
das hochpaßgefilterte Signal (S1) nach einer Abtastratenreduktion um den Faktor 2 einem ersten Pegeldetektor (PD1) zugeführt wird, welcher die Amplitude (a1) des hochpaßgefilterten Signals (S1) ermittelt,
das tiefpaßgefilterte Signal (S2) einem dritten Dezimationsfilter (D2) zugeführt wird, welches eine Hochpaßfilterung (DF2) und eine Abtastratenreduktion um den Faktor 2 vornimmt,
das tiefpaßgefilterte Signal (S2) einem zweiten adaptiven Notch-Wellendigitalfilter (ANWDF2) zugeführt wird, dessen adaptiver Filterkoeffizient (k2) ein Maß für die Frequenz des tiefpaßgefilterten Signals ist,
das tiefpaßgefilterte Signal danach einem zweiten Pegeldetektor (PD2) zugeführt wird, welcher die Amplitude (a2) des tiefpaßgefilterten Signals (S2) ermittelt,
und bei dem eine Diskriminatoreinheit (Rw) aus den ermittelten Amplituden (a1, a2) des hochpaßgefilterten Signals (S1) und des tiefpaßgefilterten Signals (52) und den adaptiven Filterkoeffizienten (k1, k2) das übertragene Zeichen (Z) ermittelt.

2. Verfahren nach Anspruch 1, dadurch **gekennzeichnet**, daß als erstes, zweites und/oder drittes Dezimationsfilter (D0, D1, D2) ein rekursives bireziprokes Brückenwellendigitalfilter eingesetzt wird.

3. Verfahren nach Anspruch 1 oder 2, dadurch **gekennzeichnet**, daß durch das erste und das zweite Dezimationsfilter (Do, D1) der Hörton (HT) eines Telefon-Kommunikationssystems ausgefiltert wird.

4. Verfahren nach einem der vorhergehenden Ansprüche, dadurch **gekennzeichnet**, daß als Notch-Wellendigitalfilter (ANWDF1, ANWDF2) ein Brückenwellendigitalfilter zweiten Grades mit einem festen Filterkoeffizienten und dem adaptiven Filterkoeffizienten (k1, k2) eingesetzt wird.

5. Verfahren nach Anspruch 4, dadurch **gekennzeichnet**, daß das jeweilige Notch-Wellendigitalfilter (ANWDF1, ANWDF2) einen Bandsperrenausgang (BS1, BS2) und einen dazu komplementären Bandpaßausgang (BP1, BP2) hat, daß zur Adaption der Bandsperrenausgang (BS1, BS2) verwendet wird und daß der jeweils nachgeschaltete Pegeldetektor (PD1, PD2) sein Signal vom Bandpaßausgang (BP1, BP2) erhält.

6. Verfahren nach einem der vorhergehenden Ansprüche, dadurch **gekennzeichnet**, daß die Verfahrensschritte und die Filteralgorithmen in einem Computerprogramm abgelegt werden, dessen Programmbefehle einen Signalprozessor steuern.

7. Einrichtung zur Auswertung von Mehrfrequenz-Tonsignalen in einem Kommunikationssystem,
bei der jedes zu übertragende Zeichen (Z) als ein Signal (S) dargestellt wird, welches ein Gemisch aus zwei Tonfrequenzen enthält, die aus zwei verschiedenen Gruppen (HG, LG) von Tonfrequenzen ausgewählt sind,
das mit einer vorbestimmten Abtastrate digital abgetastete Signal (S) durch ein erstes Dezimationsfilter (DO) in einem Tiefpaßfilter (DF0) tiefpaßgefiltert wird und eine Abtastratenreduktion um den Faktor 2 erfolgt,
das gefilterte Signal durch einen zweiten Dezimationsfilter (D1) unter weiterer Reduzierung der Abtastrate um den Faktor 2 mittels eines Bandpaßfilters (DF1) auf ein hochpaßgefiltertes Signal (S1) und ein tiefpaßgefiltertes Signal (S2) aufgeteilt wird,
das hochpaßgefilterte Signal (S1) in einem ersten adaptiven Notch-Wellendigitalfilter (ANWDF1) digital verarbeitet wird, dessen adaptiver Filterkoeffizient (k1) ein Maß für die Frequenz des hochpaßgefilterten Signals ist,
das hochpaßgefilterte Signal (S1) nach einer Abtastratenreduktion um den Faktor 2 einem ersten Pegeldetektor (PD1) zugeführt ist, welcher die Amplitude (a1) des hochpaßgefilterten Signals (S1) ermittelt,
das tiefpaßgefilterte Signal (S2) einem dritten Dezimationsfilter (D2) zugeführt ist, welches eine Hochpaßfilterung (DF2) und eine Abtastratenreduktion um den Faktor 2 vornimmt,
das tiefpaßgefilterte Signal (S2) einem zweiten adaptiven Notch-Wellendigitalfilter (ANWDF2) zugeführt ist, dessen adaptiver Filterkoeffizient (k2) ein Maß für die Frequenz des tiefpaßgefilterten Signals ist,
das tiefpaßgefilterte Signal danach einem zweiten Pegeldetektor (PD2) zugeführt ist, welcher die Amplitude (a2) des tiefpaßgefilterten Signals (S2) ermittelt,
und bei dem eine Diskriminatoreinheit (Rw) aus den ermittelten Amplituden (a1, a2) des hochpaßgefilterten Signals (S1) und des tiefpaßgefilterten Signals (S2) und den adaptiven Filterkoeffizienten (k1, k2) das übertragene Zeichen (Z) ermittelt.

8. Einrichtung nach Anspruch 7, dadurch **gekennzeichnet**, daß als erstes, zweites und/oder drittes Dezimationsfilter (D0, D1, D2) ein rekursives bireziprokes Brückenwellendigitalfilter vorgesehen ist.

9. Einrichtung nach einem der vorhergehenden Ansprüche 7 oder 8, dadurch **gekennzeichnet**, daß als Notch-Wellendigitalfilter (ANWDF1, ANWDF2) ein Brückenwellendigitalfilter zweiten Grades mit einem festen Filterkoeffizienten und dem adaptiven Filterkoeffizienten (k1, k2) vorgesehen ist.

10. Einrichtung nach Anspruch 9, dadurch **gekennzeichnet**, daß das jeweilige Notch-Wellendigitalfilter (ANWDF1, ANWDF2) einen Bandsperrenausgang (BS1, BS2) und einen dazu komplementären Bandpaßausgang (BP1, BP2) hat, daß zur Adaption der Bandsperrenausgang (BS1, BS2) verwendet wird und daß der jeweils nachgeschaltete Pegeldetektor (PD1, PD2) sein Signal vom Bandpaßausgang (BP1, BP2) erhält.

11. Einrichtung nach einem der vorhergehenden Ansprüche 7 bis 10, dadurch **gekennzeichnet**, daß die zum Steuern der digitalen Filterfunktionen erforderlichen Filteralgorithmen in einem Computerprogramm abgelegt sind, dessen Programmbefehle einen Signalprozessor steuern.
